# EUROPEAN PATENT APPLICATION

(11) **EP 4 148 835 A1**
(43) Date of publication of application: **15.03.2023**
(21) Application number: 21857193.3
(22) Date of filing: 16.04.2021
(51) Int. Cl.: H01M 4/66

(54) **CURRENT COLLECTOR, POLE PIECE AND BATTERY**

(30) Priority: 21.08.2020 CN 202010851065
(71) Applicant: Jiangsu Zenergy Battery Technologies Co., Ltd., Suzhou City, Jiangsu 215500 (CN)
(72) Inventor: YAO, Yi, Dongguan, Guangdong 523000 (CN); JIANG, Bin, Dongguan, Guangdong 523000 (CN); JIANG, Kecheng, Dongguan, Guangdong 523000 (CN)
(74) Representative: Vitina, Maruta
(86) International application number: PCT/CN2021/087684
(87) International publication number: WO 2022/037092

(57) **Abstract**

A current collector includes a substrate layer and a conductive layer. The conductive layer is arranged on a surface of the substrate layer. The substrate layer includes a polymer layer and a metal material layer connected to each other. The metal material layer is connected to the conductive layer, and partially extends out of the conductive layer. A pole piece and a battery are further provided. The current collector has reduced metal content and improved weight energy density. Moreover, the current collector can be structurally damaged at the early stage of the thermal runaway, preventing the thermal runaway.

## Description

This application claims the benefit of priority from Chinese Patent Application No. 202010851065.2, filed on August 21, 2020 and titled "CURRENT COLLECTOR, POLE PIECE AND BATTERY". The content of the aforementioned application, including any intervening amendments thereto, is incorporated herein by reference in its entirety.

### TECHNICAL FIELD

This application relates to battery manufacturing and processing, and more particularly to a current collector, pole piece and battery.

### BACKGROUND

Lithium-ion batteries are characterized by high energy density, excellent cycle life, high operating voltage, low self-discharge rate and good environmental friendliness, and thus have been extensively adopted in electric vehicles and energy storage. However, with the improvement in energy density of cathode and anode materials, lithium-ion batteries' safety and reliability have received increasingly considerable attention.

Single cell with high energy density and high capacity is extremely prone to thermal runaway in the case of overcharge, overheating, or puncture, which will further lead to fire and even explosion, seriously threatening the safety of users. The thermal runaway is often triggered by violent chemical reaction or electrochemical reaction inside the battery. When the separator is damaged by internal foreign matters (such as particles from the battery material, burrs on the pole piece or lithium dendrites formed during the charging process) or puncture, the anode and cathode pieces on both sides of the breakages may be subjected to conduction and a micro-short circuit may occur, and the short-circuit current will cause local heating inside the battery, triggering more violent chemical reaction, and resulting in combustion and explosion of electrolyte.

Therefore, there is an urgent need to find a way to effectively enhance the energy density of the battery while ensuring the safety.

### SUMMARY

In view of the deficiencies in the prior art, this application provides a current collector, which has reduced metal content, and will undergo structural damage in the early stage of thermal runaway, preventing the thermal runaway.

Technical solutions of this application are described as follows.

In a first aspect, this application provides a current collector, including:
a substrate layer; and
a conductive layer;
wherein the conductive layer is arranged on a surface of the substrate layer; the substrate layer includes a polymer layer and a metal material layer connected to each other; and the metal material layer is connected to the conductive layer, and partially extends out of the conductive layer.

In an embodiment, the metal material layer is bonded to a surface of the polymer layer.

In an embodiment, the metal material layer is partially embedded in the polymer layer.

In an embodiment, the number of the polymer layer is two, and the metal material layer is partially arranged between two polymer layers.

In an embodiment, the number of the metal material layer is two; one of two metal material layers is provided at a first end of the polymer layer; the other of the two metal material layers is provided at a second end of the polymer layer; and the first end of the polymer layer is opposite to the second end of the polymer layer.

In an embodiment, the conductive layer is formed on the surface of the substrate layer by electroplating, spraying, chemical vapor deposition or physical vapor deposition; or the conductive layer is a metal foil and pressed on the surface of the substrate layer.

In an embodiment, the polymer layer is selected from the group consisting of a polyethylene terephthalate layer, a polymethyl methacrylate layer, a polyvinyl alcohol layer, a polyvinyl chloride layer, a polyethylene layer, a polypropylene layer and a polystyrene layer.

In an embodiment, a thickness of the polymer layer is 1~20 µm; a thickness of the metal material layer is 1~20 µm; and a thickness of the conductive layer is 0.05~5 µm.

This application further provides a pole piece, including:
the above-mentioned current collector; and
an active material layer coated on at least one side of the current collector.

This application further provides a battery, including:
a cathode piece;
an anode piece; and
a separator provided between the cathode piece and the anode piece;
wherein the cathode piece is formed by the above-mentioned pole piece and a cathode active material coated thereon; and/or the anode piece is formed by the above-mentioned pole piece and an anode active material coated thereon.

Compared to the prior art, this application has the following beneficial effects.
(1) The current collector provided herein includes a substrate layer and a conductive layer, and the substrate layer includes a polymer layer and a metal material layer. Compared with the conventional metal foil current collector, the current collector provided herein has significantly reduced metal content, allowing for lighter weight and improved mass energy density.
(2) The current collector has a polymer layer with a melting point lower than that of the conventional current-collector metal foil, such that the electrode failure will occur in the early stage of heat generation within the battery, hindering the development of electrochemical reactions and internal short circuit. As a consequence, the thermal runaway is effectively avoided.
(3) Regarding the current collector provided herein, the metal material layer is connected with the conductive layer, and partially extends out of the conductive layer. The portion of the metal material layer out of the conductive layer can be configured as a tab, and processed using the conventional ultrasonic welding method, and the pulling capacity after welding is the same as that of the conventional current-collector metal foil.

### BRIEF DESCRIPTION OF THE DRAWINGS

FIG. 1 structurally shows a current collector according to Example 1 of the present disclosure;
FIG. 2 structurally shows a current collector according to Example 2 of the present disclosure;
FIG. 3 structurally shows a current collector according to Example 3 of the present disclosure;
FIG. 4 structurally shows a current collector according to Example 4 of the present disclosure;
FIG. 5 structurally shows a current collector according to Example 5 of the present disclosure; and
FIG. 6 structurally shows a current collector according to Example 6 of the present disclosure.

In the figures: 1-substrate layer; 2-conductive layer; 11-polymer layer; and 12-metal material layer.

### DETAILED DESCRIPTION OF EMBODIMENTS

The disclosure will be further described in detail below in conjunction with the accompanying drawings and embodiments. It should be noted that these embodiments are merely illustrative, and are not intended to limit the disclosure.

### 1. Current collector

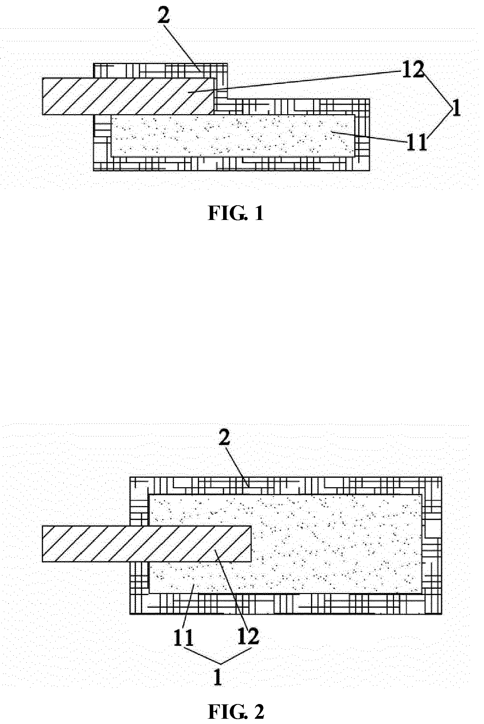

Referring to FIGS. 1-6, a current collector provided herein includes a substrate layer 1 and a conductive layer 2. The conductive layer 2 is provided on a surface of the substrate layer 1. The substrate layer 1 includes a polymer layer 11 and a metal material layer 12 connected to each other, where the metal material layer 12 is connected to the conductive layer 2, and the metal material layer 12 partially extends out of the conductive layer 2. The part of the metal material layer 12 extending out of the conductive layer 2 is processed into a tab by cutting.

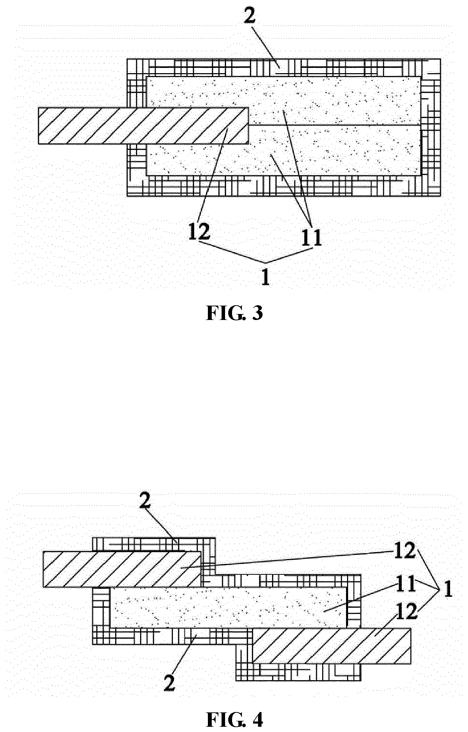

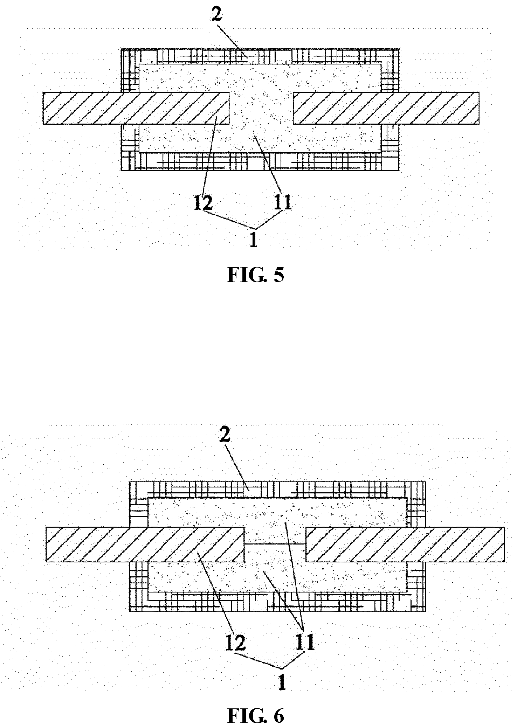

Referring to embodiments shown in FIGS. 1 and 4, the metal material layer 12 is bonded to a surface of the polymer layer 11. The metal material layer 12 partially covers the polymer layer 11 to increase the energy density and prevent a short circuit after the polymer layer 11 is melted. Referring to embodiments shown in FIGS. 2 and 5, the metal material layer 12 is partially embedded in the polymer layer 11. Referring to embodiments shown in FIGS. 3 and 6, two polymer layers 11 are provided, and the metal material layer 12 is partially arranged between the two polymer layers 11.

Referring to embodiments illustrated in FIGS. 4-6, two metal material layers 12 are provided, and the two metal material layers 12 are respectively disposed at opposite ends of the polymer layer 11, such that tabs are respectively formed at both ends of the current collector.

In some embodiments, the conductive layer 2 is formed on the surface of the substrate layer 1 by electroplating, spraying, chemical vapor deposition or physical vapor deposition. In some embodiments, the conductive layer 2 is a metal foil, and the metal foil is pressed on the surface of the substrate layer 1.

In some embodiments, the polymer layer 11 is selected from the group consisting of a polyethylene terephthalate layer, a polymethyl methacrylate layer, a polyvinyl alcohol layer, a polyvinyl chloride layer, a polyethylene layer, a polypropylene layer and a polystyrene layer.

In some embodiments, a thickness of the polymer layer 11 is 1~20 µm; a thickness of the metal material layer 12 is 1~20 µm; and a thickness of the conductive layer 2 is 0.05~5 µm.

### 2. Pole piece

A pole piece provided herein includes the above-mentioned current collector and an active material layer coated on at least one side thereof.

### Cathode piece

In some embodiments, the active material layer includes a cathode active material containing a compound that can reversibly embed and de-embed lithium ions. In some embodiments, the cathode active material includes a composite oxide containing at least one element selected from the group consisting of lithium, cobalt, manganese and nickel. In some embodiments, the cathode active material is selected from the group consisting of lithium cobalt oxide (LiCoO₂), lithium nickel-manganese-cobalt ternary material, lithium manganate (LiMn₂O₄), Lithium Nickel Manganese Oxide (LiNi_{0.5}Mn_{1.5}O₄), lithium iron phosphate (LiFePO₄), and a combination thereof.

In some embodiments, the active material layer further includes a binder to improve the binding between the cathode active material particles, and the binding between the cathode active material and the current collector. The binder is selected from the group consisting of polyvinyl alcohol, hydroxypropyl cellulose, diacetyl cellulose, polyvinyl chloride, carboxylated polyvinyl chloride, polyvinyl fluoride, a polymer containing an ethyleneoxy group, polyvinylpyrrolidone, polyurethane, polytetrafluoroethylene, polyvinylidene difluoride, polyethylene, polypropylene, styrene-butadiene rubber, acrylic acid grafted styrene-butadiene rubber, epoxy resin, and nylon.

In some embodiments, the active material layer further includes a conductive material to render the pole piece conductive. The conductive material may be any conductive material without causing chemical changes. The conductive material is selected from the group consisting of carbon-based materials (such as natural graphite, artificial graphite, carbon black, acetylene black, Ketjen black, and carbon fiber), metal-based materials (such as metal (e.g., copper, nickel, aluminum, and silver) powders, and fibers), conductive polymers (such as polyphenylene derivatives) and a mixture thereof.

### Anode piece

In some embodiments, the active material layer includes an anode active material, which is selected from the group consisting of natural graphite, artificial graphite, mesocarbon microbeads (MCMB), hard carbon, soft carbon, silicon, silicon-carbon composites, Li-Sn alloys, Li-Sn-O alloys, Sn, SnO, SnO₂, spinel Li₄Ti₅O₁₂-TiO₂, Li-Al alloy and a combination thereof.

In some embodiments, the active material layer includes a binder to improve the binding between the anode active material particles and the binding between the anode active material and the current collector. The binder is selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, a polymer containing an ethyleneoxy group, polyvinylpyrrolidone, polyurethane, polytetrafluoroethylene, polyvinylidene difluoride, polyethylene, polypropylene, polyacrylic acid, polyacrylonitrile, styrene-butadiene rubber, acrylic acid grafted styrene-butadiene rubber, epoxy resin, and nylon.

In some embodiments, the active material layer further includes a conductive material to render the pole piece conductive. The conductive material may be any conductive material without causing chemical changes. The conductive material is selected from the group consisting of carbon-based materials (such as natural graphite, artificial graphite, carbon black, acetylene black, Ketjen black, and carbon fiber), metal-based materials (such as metal (e.g., copper, nickel, aluminum, and silver) powder fibers), conductive polymers (such as polyaniline, polythiophene, and phenylene derivatives) and a mixture thereof.

### 3. Battery

A battery provided herein includes a cathode piece, an anode piece, and a separator arranged between, where the cathode piece is formed by the above current collector and a cathode active material coated thereon, and the anode piece is formed by the above current collector and an anode active material coated thereon.

The disclosure will be further described in detail below in conjunction with examples, comparative examples, test procedures and results.

### Comparative Example 1

### Preparation of cathode piece

Nickel cobalt manganese oxide (NCM523) powder, Super P (SP) conductive carbon black, vapor-grown carbon fiber (VGCF) and polytetrafluoroethylene (PTFE) were mixed in a mass ratio of 92: 3: 3: 2, and dispersed in a solvent under stirring to form a slurry. The slurry was coated on a current-collector aluminum foil with a thickness of 12 µm, dried and rolled to form the cathode piece with a thickness of 120 µm, where the coating amount of the slurry was 17.8 mg/cm².

### Preparation of anode piece

Artificial graphite powder, SP conductive carbon black, VGCF and PTFE were mixed in a mass ratio of 95: 1: 2: 2, and dispersed in a solvent under stirring to form a slurry. The slurry was coated on a current-collector copper foil with a thickness of 8 µm, dried and rolled to form an anode piece with a thickness of 110 µm, where the coating amount of the slurry was 10.4 mg/cm².

### Preparation of separator

A porous polypropylene film with a thickness of 10 µm was used as the separator.

### Preparation of battery

The cathode piece, the separator and the anode piece were wound to form a battery cell, where the separator was placed between the adjacent cathode and anode pieces. Then the battery cell was placed in an aluminum-plastic packaging bag, injected with an electrolyte, and subjected to packaging, and formation to manufacture a battery.

### Example 1

Example 1 was different from the Comparative example 1 in the preparation of the cathode piece.
(1) An aluminum foil (metal material layer 12) with a thickness of 9 µm was partially bonded to a surface of a PET film (polymer layer 11) with a thickness of 12 µm to form a substrate layer 1. An aluminum coating (conductive layer 2) with a thickness of 2 µm was formed on the surface of the PET film and part of the aluminum foil by vacuum evaporation to obtain a cathode current collector as shown in FIG. 1.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form a cathode piece with a thickness of 120 µm, where the coating amount of the cathode slurry was 17.8 mg/cm².

### Example 2

Example 2 was different from the Comparative example 1 in the preparation of the cathode piece.
(1) An aluminum foil (metal material layer 12) with a thickness of 9 µm was partially covered with a PET film (polymer layer 11) with a thickness of 12 µm to form the substrate layer 1, where the aluminum foil was partially embedded into an end of the PET film. An aluminum coating (conductive layer 2) with a thickness of 2 µm was formed on the surface of the PET film and part of the aluminum foil by vacuum evaporation to obtain the cathode current collector as shown in FIG. 2.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

### Example 3

Example 3 was different from the Comparative example 1 in the preparation of the cathode piece.
(1) An aluminum foil (metal material layer 12) with a thickness of 9 µm was partially sandwiched between two PET films (polymer layers 11) with a thickness of 5 µm to form the substrate layer 1. An aluminum coating (conductive layer 2) with a thickness of 2 µm was formed on the surface of the PET film and part of the aluminum foil by vacuum evaporation to obtain the cathode current collector as shown in FIG. 3.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

### Example 4

Example 4 was different from the Comparative example 1 in the preparation of the cathode piece.
(1) Two aluminum foils (metal material layer 12) with a thickness of 9 µm were respectively bonded to two surfaces of a PET film (polymer layer 11) with a thickness of 12 µm to form a substrate layer 1. An aluminum coating (conductive layer 2) with a thickness of 2 µm was formed on the surface of the PET film and part of the aluminum foil by vacuum evaporation to obtain the cathode current collector as shown in FIG. 4.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

### Example 5

Example 5 was different from the Comparative example 1 in the preparation of the cathode piece.
(1) Two aluminum foils (metal material layer 12) with a thickness of 9 µm were partially covered with a PET film (polymer layer 11) with a thickness of 12 µm, and the two aluminum foils were embedded at opposite ends of the PET film to form the substrate layer 1. An aluminum coating (conductive layer 2) with a thickness of 2 µm was formed on the surface of the PET film and part of the aluminum foil by vacuum evaporation to obtain the cathode current collector as shown in FIG 5.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

### Example 6

Example 6 was different from the Comparative example 1 in the preparation of the cathode piece.
(1) Two aluminum foils (metal material layer 12) with a thickness of 9 µm were partially sandwiched between two PET films (polymer layer 11) with a thickness of 5 µm, where the two aluminum foils were located at opposite ends of the two PET films to form the substrate layer 1. An aluminum coating (conductive layer 2) with a thickness of 2 µm was formed on the surface of the PET film and part of the aluminum foil by vacuum evaporation to obtain the cathode current collector as shown in FIG. 6.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

### Example 7

Example 7 was different from the Comparative example 1 in the preparation of the anode piece.
(1) A copper foil (metal material layer 12) with a thickness of 3 µm was partially bonded to a surface of a PET film (polymer layer 11) with a thickness of 6 µm to form the substrate layer 1, and a copper coating with a thickness of 1 µm was formed on the surface of the PET film and part of the copper foil by vacuum evaporation to obtain the anode current collector as shown in FIG. 1.
(2) Artificial graphite powder, SP conductive carbon black, VGCF and PTFE were mixed in a mass ratio of 95: 1: 2: 2, and dispersed in a solvent under stirring to form an anode slurry. The anode slurry was coated on the copper coating of the anode current collector, dried and rolled to form an anode piece with a thickness of 110 µm, where the coating amount of the anode slurry was 10.4 mg/cm².

### Example 8

Example 8 was different from the Comparative example 1 in the preparation of the anode piece.
(1) A copper foil (metal material layer 12) with a thickness of 3 µm was partially covered with a PET film (polymer layer 11) with a thickness of 6 µm to form the substrate layer 1, where the copper foil was partially embedded into an end of the PET film. A copper coating (conductive layer 2) with a thickness of 1 µm was formed on the surface of the PET film and part of the copper foil by vacuum evaporation to obtain the anode current collector as shown in FIG. 2.
(2) Artificial graphite powder, SP conductive carbon black, VGCF and PTFE were mixed in a mass ratio of 95: 1: 2: 2, and dispersed in a solvent under stirring to form an anode slurry. The anode slurry was coated on the copper coating of the anode current collector, dried and rolled to form an anode piece with a thickness of 132 µm, where the coating amount of the anode slurry was 10.4 mg/cm².

### Example 9

Example 9 was different from the Comparative example 1 in the preparation of the anode piece.
(1) A copper foil (metal material layer 12) with a thickness of 3 µm was partially sandwiched between two PET films (polymer layers 11) with a thickness of 6 µm to form the substrate layer 1. A copper coating with a thickness of 1 µm was formed on the surface of the PET film and part of the copper foil by vacuum evaporation to obtain the anode current collector as shown in FIG. 3.
(2) Artificial graphite powder, SP conductive carbon black, VGCF and PTFE were mixed in a mass ratio of 95: 1: 2: 2, and dispersed in a solvent under stirring to form an anode slurry. The anode slurry was coated on the copper coating of the anode current collector, dried and rolled to form an anode piece with a thickness of 132 µm, where the coating amount of the anode slurry was 10.4 mg/cm².

### Example 10

The differences from the Comparative example 1 were described as follows.

### Preparation of cathode piece

(1) An aluminum foil (metal material layer 12) with a thickness of 9 µm was partially bonded to a surface of a PET film (polymer layer 11) with a thickness of 12 µm to form the substrate layer 1. An aluminum coating (conductive layer 2) with a thickness of 2 µm was formed on the surface of the PET film and part of the aluminum foil by vacuum evaporation to obtain a cathode current collector as shown in FIG. 1.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form a cathode piece with a thickness of 120 µm, where the coating amount of the cathode slurry was 17.8 mg/cm².

### Preparation of anode piece

(1) A copper foil (metal material layer 12) with a thickness of 3 µm was partially bonded to a surface of a PET film (polymer layer 11) with a thickness of 6 µm to form the substrate layer 1. A copper coating with a thickness of 1 µm was formed on the surface of the PET film and part of the copper foil by vacuum evaporation to obtain an anode current collector as shown in FIG. 1.
(2) Artificial graphite powder, SP conductive carbon black, VGCF and PTFE were mixed in a mass ratio of 95: 1: 2: 2, and dispersed under stirring to form an anode slurry. The anode slurry was coated on the copper coating of the anode current collector, dried and rolled to form an anode piece with a thickness of 110 µm, where the coating amount of the anode slurry was 10.4 mg/cm².

### Example 11

The differences from the Comparative example 1 were described as follows.

Preparation of cathode piece
(1) An aluminum foil (metal material layer 12) with a thickness of 9 µm was partially covered with a PET film (polymer layer 11) with a thickness of 12 µm to form the substrate layer 1, where the aluminum foil was partially embedded into an end of the PET film. An aluminum coating (conductive layer 2) with a thickness of 2 µm was formed on the surface of the PET film and part of the aluminum foil by vacuum evaporation to obtain the cathode current collector as shown in FIG. 2.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

Preparation of anode piece
(1) A copper foil (metal material layer 12) with a thickness of 3 µm was partially covered with a PET film (polymer layer 11) with a thickness of 6 µm to form the substrate layer 1, where the copper foil was partially embedded into an end of the PET film. A copper coating (conductive layer 2) with a thickness of 1 µm was formed on the surface of the PET film and part of the copper foil by vacuum evaporation to obtain the anode current collector as shown in FIG. 2.
(2) Artificial graphite powder, SP conductive carbon black, VGCF and PTFE were mixed in a mass ratio of 95: 1: 2: 2, and dispersed in a solvent under stirring to form an anode slurry. The anode slurry was coated on the copper coating of the anode current collector, dried and rolled to form an anode piece with a thickness of 132 µm, where the coating amount of the anode slurry was 10.4 mg/cm².

### Example 12

The differences from the Comparative example 1 were described as follows.

Preparation of cathode piece
(1) An aluminum foil (metal material layer 12) with a thickness of 9 µm was partially sandwiched between two PET films (polymer layers 11) with a thickness of 5 µm to form the substrate layer 1. An aluminum coating (conductive layer 2) with a thickness of 2 µm was formed on the surface of the PET film and part of the aluminum foil by vacuum evaporation to obtain the cathode current collector as shown in FIG. 3.
(2) NCM523 powder, SP conductive carbon black, VGCF and PTFE were mixed in a mass ratio of 92: 3: 3: 2, and dispersed in a solvent under stirring to form a cathode slurry. The cathode slurry was coated on the aluminum coating of the cathode current collector, dried and rolled to form the cathode piece with a thickness of 120 µm, where the coating amount of the cathode slurry was 17.8 mg/cm².

Preparation of anode piece
(1) A copper foil (metal material layer 12) with a thickness of 3 µm was partially sandwiched between two PET films (polymer layers 11) with a thickness of 6 µm to form the substrate layer 1. A copper coating with a thickness of 1 µm was formed on the surface of the PET film and a part of the copper foil by vacuum evaporation to obtain the anode current collector as shown in FIG. 3.
(2) Artificial graphite powder, SP conductive carbon black, VGCF and PTFE were mixed in a mass ratio of 95: 1: 2: 2, and dispersed in a solvent under stirring to form an anode slurry. The anode slurry was coated on the copper coating of the anode current collector, dried and rolled to form an anode piece with a thickness of 132 µm, where the coating amount of the anode slurry was 10.4 mg/cm².

### Performance testing

The batteries obtained from Examples 1-12 and the Comparative example 1 were tested as follows.

### (1) Mass energy density

The mass energy density of the battery cells was measured and expressed in Wh/kg.

### (2) Safety performance

After charged to 4.2 V at constant current and constant voltage, the battery was punctured at a speed of 25 ± 5 mm/s using a steel needle with a diameter of 3 mm and observed. If no smoke, fire and explosion was observed, the battery was marked as "qualified"; if there was smoke and fire but no explosion was observed, the battery was marked as "to be determined" (TBD); and if there was fire and explosion, the battery was marked as "failed".

**Table 1 Test results**

| Sample | Mass energy density (Wh/kg) | Safety performance |
|---|---|---|
| Example 1 | 209 | TBD |
| Example 2 | 210 | Qualified |
| Example 3 | 211 | Qualified |
| Example 4 | 206 | TBD |
| Example 5 | 207 | Qualified |
| Example 6 | 207 | Qualified |
| Example 7 | 215 | TBD |
| Example 8 | 213 | Qualified |
| Example 9 | 215 | Qualified |
| Example 10 | 224 | Qualified |
| Example 11 | 222 | Qualified |
| Example 12 | 223 | Qualified |
| Comparative Example 1 | 198 | Failed |

It can be seen from Table 1 that the batteries whose cathode or anode piece adopted the current collector of the disclosure and the batteries whose cathode and anode pieces both adopted the current collector of the disclosure were superior to the batteries using the conventional current collector in mass energy density and safety performance. Test results of Examples 1-6 demonstrated that the batteries with tabs at the same end were similar to the batteries with tabs on opposite ends in the tested performances. Moreover, the batteries, in which the metal material layer was embedded into the polymer layer or sandwiched between the polymer layers, had slightly better than safety performance that the batteries in which the metal material layer and the polymer layer were connected by bonding.

It can be concluded that the current collector of the present disclosure had a significantly reduced metal content, allowing for lighter weight and enhanced mass energy density. Further, the polymer layer of the current collector will melt at a temperature lower than the melting point of the conventional current collector metal foil, such that the electrodes will fail in the early stage of the heat generation in the batteries to prevent electrochemical reactions and internal short circuits, thereby preventing thermal runaway.

Although the present disclosure has been described in detail above with reference to the embodiments, those skilled in the art can still make some modifications, replacements and variations to the technical solutions disclosed herein. Understandably, those modifications, variations and replacements made by those skilled in the art without departing from the spirit of the disclosure should fall within the scope of the disclosure defined by the appended claims. Further, some specific terms used herein are only for the convenience of description, and are not intend to limit the present disclosure.

## Claims

1. A current collector, comprising:
a substrate layer (1); and
a conductive layer (2);
**characterized in that** the conductive layer (2) is arranged on a surface of the substrate layer (1); the substrate layer (1) comprises a polymer layer (11) and a metal material layer (12) connected to each other; and the metal material layer (12) is connected to the conductive layer (2), and partially extends out of the conductive layer (2).

2. The current collector according to claim 1, **characterized in that** the metal material layer (12) is bonded to a surface of the polymer layer (11).

3. The current collector according to claim 1, **characterized in that** the metal material layer (12) is partially embedded in the polymer layer (11).

4. The current collector according to claim 1, **characterized in that** the number of the polymer layer (11) is two, and the metal material layer (12) is partially arranged between two polymer layers (11).

5. The current collector according to claim 1, **characterized in that** the number of the metal material layer (12) is two; one of two metal material layers (12) is provided at a first end of the polymer layer (11); the other of the two metal material layers (12) is provided at a second end of the polymer layer (11); and the first end of the polymer layer (11) is opposite to the second end of the polymer layer (11).

6. The current collector according to claim 1, **characterized in that** the conductive layer (2) is formed on the surface of the substrate layer (1) by electroplating, spraying, chemical vapor deposition or physical vapor deposition; or
the conductive layer (2) is a metal foil, and is pressed on the surface of the substrate layer (1).

7. The current collector according to claim 1, **characterized in that** the polymer layer (11) is selected from the group consisting of a polyethylene terephthalate layer, a polymethyl methacrylate layer, a polyvinyl alcohol layer, a polyvinyl chloride layer, a polyethylene layer, a polypropylene layer and a polystyrene layer.

8. The current collector according to claim 1, **characterized in that** a thickness of the polymer layer (11) is 1~20 µm; a thickness of the metal material layer (12) is 1~20 µm; and a thickness of the conductive layer (2) is 0.05~5 µm.

9. A pole piece, comprising:
the current collector according to any one of claims 1-8; and
an active material layer coated on at least one side of the current collector.

10. A battery, comprising:
a cathode piece;
an anode piece; and
a separator provided between the cathode piece and the anode piece;
wherein the cathode piece and/or the anode piece are/is the pole piece according to claim 9.
